Europäisches Patentamt

European Patent Office

Office européen des brevets

(11) Publication number: **0 324 392 B1**

# EUROPEAN PATENT SPECIFICATION

(45) Date of publication of patent specification: 30.03.94

(51) Int. Cl.5: **C08L 25/02**, C08K 13/02, //(C08K13/02,5:00,3:22), (C08L25/02,27:18,101:00)

(21) Application number: **89100222.2**

(22) Date of filing: **07.01.89**

The file contains technical information submitted after the application was filed and not included in this specification

(54) **Flame-retardant resin composition.**

(30) Priority: **14.01.88 JP 4920/88**

(43) Date of publication of application:
**19.07.89 Bulletin 89/29**

(45) Publication of the grant of the patent:
**30.03.94 Bulletin 94/13**

(84) Designated Contracting States:
**AT BE CH DE ES FR GB IT LI NL SE**

(56) References cited:
**US-A- 4 049 624**

**WPIL, FILE SUPPLIER, no. 86-249848, Derwent Publications Ltd, London, GB; & JP-A-61 179 249 (MITSUI TOATSU CHEM. INC.) 11-08-1986**

**WPIL, FILE SUPPLIER, no. 87-353232, Derwent Publications Ltd, London, GB; & JP-A-62 257 950 (IDEMITSU KOSAN K.K.) 10-11-1987**

**WPIL, FILE SUPPLIER, no. 87-353230, Derwent Publications, Ltd, London, GB; & JP-A-62 257 948 (IDEMITSU KOSAN K.K.) 10-11-1987**

(73) Proprietor: **IDEMITSU KOSAN COMPANY LIMITED**
**1-1, Marunouchi 3-chome**
**Chiyoda-ku**
**Tokyo(JP)**

(72) Inventor: **Nakano, Akikazu**
**No. 216, Imazuasayama**
**Ichihara-shi Chiba-ken(JP)**

(74) Representative: **Türk, Gille, Hrabal, Leifert**
**Brucknerstrasse 20**
**D-40593 Düsseldorf (DE)**

**Description**

BACKGROUND OF THE INVENTION

The present invention relates to a flame-retardant resin composition and more particularly to a resin composition which is excellent in flame retardance and further in heat resistance and mechanical strength. Thus, moldings obtained using the resin composition of the present invention are useful as home electric appliances, electronic parts, car parts, construction materials and so forth.

Styrene-based resins are widely used in a wide variety of applications, for example, as home electric appliances, construction materials and further as interior materials because of their excellent properties.

The styrene-based resins, however, are easily combustible and their moldings once start to burn by approaching a flame to a part thereof continue to burn even if the flame is removed. Because of this disadvantage, the styrene-based resins can be used only in limited applications.

As a result of further investigations to overcome the above problems, specifically using a styrene-based polymer having mainly syndiotactic configuration which was developed by the present applicant (see Japanese Patent Application Laid-Open No. 104818/1987), it has been found that a resin composition having the desired physical properties can be obtained by adding specified amounts of a flame retardant and auxiliary flame retardant to a styrene-based polymer having mainly syndiotactic configuration or a mixture of the styrene-based resin and a thermoplastic resin and/or rubber and, in particular, a resin composition containing a flame retardant and an auxiliary flame retardant, polytetrafluoroethylene, in a specified ratio is effective in preventing melt dropping which is responsible for the spreading of fire of the resin composition.

In Derwent Publication No. 87-35 32 30 a mixture of a polystyrene having mainly syndiotactic structure and an inorganic filler, e.g. glass fibre, carbon fibre, alumina fibre, carbon black, $TiO_2$, silica, asbestos etc. is disclosed, which has improved mechanical strength and heat resistance.

SUMMARY OF THE INVENTION

The object of the present invention is to provide a resin composition which is excellent in flame retardance and further in heat resistance and mechanical strength.

Firstly, the present invention relates to a flame-retardant resin composition comprising:

(a) 100 parts by weight of a styrene-based polymer having mainly syndiotactic configuration, such that the proportion of racemic pentad is at least 30 %, or a mixture comprising 1 - 99 % by weight of said styrene-based polymer and 99 - 1 % by weight of a thermoplastic resin (exclusive of tetrafluoroethylene-based polymer) and/or rubber;

(b) 3 to 40 parts by weight of a flame retardant selected from the group consisting of polychlorostyrene, brominated polysterene, poly(dibromophenyleneoxide), decabromodiphenyl ether and tetrabromobisphenol A, and

(c) 1 to 15 parts by weight of an auxiliary flame retardant selected from the group consisting of antimony - containing auxiliary flame retardants, zinc borate, barium-metaborate and zirconium oxide.

Secondly, the present invention relates to a flame-retardant composition comprising:

(a) 100 parts by weight of said styrene-based polymer having mainly syndiotactic configuration, or a mixture of said styrene-based polymer and a thermoplastic resin (exclusive of tetrafluoroethylene-based polymer) and/or rubber;

(b) 3 to 40 parts by weight of said flame retardant;

(c) 1 to 15 parts by weight of said auxiliary flame retardant; and

(d) 0.003 to 10 parts by weight of tetrafluoroethylene based polymer.

Thirdly, the present invention relates to a flame-retardant composition comprising:

(a) 100 parts by weight of said styrene-based polymer having mainly syndiotactic configuration, or a mixture of said styrene-based polymer and a thermoplastic resin (exclusive of tetrafluoroethylene-based polymer) and/or rubber;

(b) 3 to 40 parts by weight of said flame retardant;

(c) 1 to 15 parts by weight of said auxiliary flame retardant; and

(e) 1 to 300 parts by weight of an inorganic filler.

Fourthly, the present invention relates to a flame-retardant composition comprising:

(a) 100 parts by weight of said styrene-based polymer having mainly syndiotactic configuration, or a mixture of said styrene-based polymer and a thermoplastic resin (exclusive of tetrafluoroethylene-based polymer) and/or rubber;

(b) 3 to 40 parts by weight of said flame retardant;

(c) 1 to 15 parts by weight of said auxiliary flame retardant;

(d) 0.003 to 10 parts by weight of tetrafluoroethylene-based polymer; and

(e) 1 to 300 parts by weight of an inorganic filler.

DETAILED DESCRIPTION OF THE INVENTION

The flame-retardant resin composition of the present invention contains the above components (a), (b) and (c) as main components.

The component (a) is a styrene-based polymer having mainly the syndiotactic configuration, or a mixture of the styrene-based polymer and a thermoplastic resin and/or rubber.

The styrene-based polymer having mainly syndiotactic configuration means a polymer having configuration that with respect to a main chain comprising a carbon-carbon bond, phenyl groups or substituted phenyl groups as side chains are positioned alternately in the opposite directions. The tacticity is determined by the nuclear magnetic resonance method using a carbon isotope (the $^{13}$C-NMR method).

The tacticity as determined by the $^{13}$C-NMR method can be indicated in terms of the proportions of a plurality of continuous constitutional units, for example, diad when two constitutional units are continuously linked to each other, triad when three constitutional units are continuously linked to each other, or pentad when five constitutional units are continuously linked to each other.

The styrene-based polymer having mainly syndiotactic configuration to be used in the present invention includes polystyrene, poly(alkylstyrene), poly(halogenated styrene), poly(alkoxystyrene), poly(vinyl benzoate)and their mixtures, and copolymers containing the above monomer as the main component, each usually having a syndiotacticity that the proportion of diad is at least 75% and preferably at least 85%, or the proportion of pentad (racemic pentad) is at least 30% and preferably at least 50%.

Typical examples of the poly(alkylstyrene) are polymethylstyrene, polyethylstyrene, polyisopropylstyrene, poly-tert-butylstyrene and the like. Typical examples of the poly(halogenatedstyrene) are polychlorostyrene, polybromostyrene, polyfluorostyrene and the like. Typical examples of the poly(alkoxystyrene) are polymethoxystyrene, polyethoxystyrene and the like. Particularly preferred examples of the styrene-based polymers are polystyrene, poly-p-methylstyrene, poly-m-methylstyrene, poly-p-tert-butylstyrene, poly-p-chlorostyrene, poly-m-chlorostyrene, poly-p-fluorostyrene, and a copolymer of styrene and p-methylstyrene.

The styrene-based polymer to be used in the present invention varies in molecular weight. The weight average molecular weight of the styrene-based polymer is preferably at least 50,000 and particularly preferably at least 100,000. If the weight average molecular weight is less than 50,000, the styrene-based polymer is not sufficiently high in heat resistance and mechanical strength, and the resulting composition is not sufficiently improved in heat resistance and mechanical strength.

The styrene-based polymer to be used in the present invention is not critical in a distribution of molecular weight, and those having various distributions of molecular weight can be used.

The upper limit of the weight average molecular weight of the styrene-based polymer is usually about 1,000,000 although it is not limited thereto.

The styrene-based polymer having mainly syndiotactic configuration has a melting point of 160 to 310 °C and thus is much superior in heat resistance to the conventional styrene-based polymers having the atactic configuration.

The styrene-based polymer having mainly syndiotactic configuration can be prepared, for example, by polymerizing a styrene-based monomer (corresponding to the above styrene-based polymers) by the use of a catalyst comprising a titanium compound and a condensate of trialkylaluminum and water in the presence or absence of an inert hydrocarbon solvent (see Japanese Patent Application Laid-Open No. 187708/1987).

As the component (a) of the present invention, the styrene-based polymer having mainly syndiotactic configuration is used alone or in combination with other thermoplastic resins and/or rubber.

A suitable thermoplastic resin is chosen depending on the purpose of use of the composition and so forth. For example, styrene-based polymers such as polystyrene having an atactic configuration, polystyrene having an isotactic configuration, an AS resin and an ABS resin can be used. In addition, polyesters such as polyethylene terephthalate, polycarbonate, polyethers such as polyphenyleneoxide, polysulfone and polyethersulfone, condensed polymers such as polyamide, polyphenylenesulfide (PPS) and polyoxyethylene, acryl-based polymers such as polyacrylic acid, polyacrylate and polymethyl methacrylate, polyolefins such as polyethylene, polypropylene, polybutene, poly(4-methylpentene-1) and an ethylene propylene copolymer, halogen-containing vinyl compound polymers such as polyvinyl chloride, polyvinylidene chloride, and polyvinylidene fluoride and the like can be used.

3

Of these polymers, polycarbonate, polyester, ABS, polyether, polyphenylenesulfide and the like are preferred.

Various types of rubber can be used. Of these, rubber-like copolymers containing a styrene-based compound as one component are most suitable. Examples of rubber-like copolymers are a styrene-butadiene copolymer rubber (SBR), a rubber obtained by partially or completely hydrogenating the butadiene portion of a styrene-butadiene block copolymer rubber (SEBS), a styrene-isoprene block copolymer rubber, a rubber obtained by partially or completely hydrogenating the isoprene portion of a styrene-isoprene block copolymer.

In addition, as described in the specification of Japanese Patent Application No. Sho. 63-121700, granular elastomers obtained by polymerizing a vinyl-based monomer in the presence of a polymer obtained by polymerizing one or more monomers selected from the group consisting of alkyl acrylate, alkyl methacrylate and a polyfunctional monomer having a conjugated diene type double bond, e.g., acrylonitrile-styrene grafted butadiene rubber (ABS), acrylonitrile-styrene grafted butadiene-butyl acrylate copolymer rubber (AABS), methyl methacrylate-styrene grafted butyl acrylate rubber (methyl methacrylate-n-butyl acrylate-styrene copolymer) (MAS), styrene grafted butadiene rubber (SB), methyl methacrylate-styrene grafted butadiene rubber (MBS), and methyl methacrylate-styrene grafted butadiene-butyl acrylate copolymer rubber (MABS) can be used as rubber-like copolymer.

Since the above rubber-like copolymers have a styrene unit, they exhibit good dispersibility to the styrene-based polymer having mainly syndiotactic configuration to be used as the component (a), and thus greatly improve physical properties. Other rubbers which can be used include natural rubber, polybutadiene, polyisoprene, polyisobutylene, neoprene, ethylenepropylene copolymer rubber, polysulfide rubber, thiokole rubber, acryl rubber, urethane rubber, silicone rubber, epichlorohydrin rubber, polyether·ester rubber, polyester·ester rubber, and mixtures thereof.

When the thermoplastic resin and/or rubber is used as a mixture with the styrene-based polymer having mainly syndiotactic configuration, the thermoplastic resin and/or rubber is added in an amount of 1 to 99% by weight, preferably 3 to 95% by weight and more preferably 5 to 90% by weight of the mixture. If the amount is less than 1% by weight, the objective effects cannot be obtained, and there is no significant difference in properties between the resulting composition and the styrene-based polymer having mainly syndiotactic configuration alone. On the other hand, if it is more than 99% by weight, there is no significant difference in properties between the resulting composition and the thermoplastic resin and/or rubber; no improvement in thermal properties can be expected.

Halogen-containing flame retardants are used as the component (b) of the present invention.

Examples of the halogen-containing flame retardant component (b) are tetrabromobisphenol A, decabromodiphenyl ether, polychlorostyrene, brominated polystyrene such as polytribromostyrene and the like, and poly(dibromophenylene oxide).

Of the above flame retardants, polytribromostyrene, poly(dibromophenylene oxide), decabromodiphenyl ether, and tetrabromobisphenol A are preferred.

The amount of the component (b) (flame retardant) added is 3 to 40 parts by weight, preferably 5 to 35 parts by weight, and more preferably 11 to 35 parts by weight per 100 parts by weight of the component (a). If the amount of the component (b) added is less than 3 parts by weight, the resulting resin composition is not sufficiently satisfactory in flame retardance. On the other hand, if it is more than 40 parts by weight, flame retardance is not further improved and on the contrary, other mechanical properties are undesirably deteriorated.

The type and the amount of the component (b) must be determined appropriately depending on the purpose of use and so forth. For example, in applications where heat resistance is important, such as home electric appliances, high melting compounds (m.p., more than 250°C) such as decabromodiphenyl ether is used. When it suffices that flame retardance corresponding to V-2 of UL standards is obtained, the amount of the component (b) is preferably about 3 to 10 parts by weight. When flame retardance corresponding to V-1 to V-0 is needed, the amount of the component (b) is preferably 11 to 40 parts by weight.

In the present invention, the auxiliary flame retardant is needed to use as the component (c) in combination with the component (b). The objective effects cannot be obtained if only one of the components (b) and (c) is used.

Various auxiliary flame retardants can be used as the component (c). For example, antimony-containing auxiliary flame retardants, e.g., antimony trioxide, antimony pentaoxide, sodium antimonate, metallic antimony, antimony trichloride, antimony pentachloride, antimony trisulfide, and antimony pentasulfide can be used. In addition, zinc borate, barium metaborate and zirconium oxide can be used. Of these compounds, antimony trioxide is preferably used as the component (c).

4

The amount of the component (c) added is 1 to 15 parts by weight, preferably 2 to 10 parts by weight and more preferably 3 to 8 parts by weight per 100 parts by weight of the component (a).

If the amount of the component (c) added is less than 1 part by weight, the effect as the auxiliary flame retardant cannot be obtained sufficiently. On the other hand, even if the component (c) is added in an amount greater than 15 parts by weight, no additional effect can be obtained, and rather other physical properties are undesirably likely to be deteriorated.

In the case that a tetrafluoroethylene-based polymer is used as the component (d) of the present invention, melt dropping of the resin can be inhibited during its burning and thus the spreading of fire due to the melt dropping can be effectively prevented.

Specific examples of the tetrafluoroethylene-based polymer are a tetrafluoroethylene homopolymer (polytetrafluoroethylene), a copolymer of tetrafluoroethylene and hexafluoropropylene, and a tetrafluoroethylene copolymer containing a small amount of a copolymerizable ethylenically unsaturated monomer. The fluorine content of the tetrafluoroethylene-based polymer is 65 to 76% by weight and preferably 70 to 76% by weight.

The amount of the component (d) compounded is 0.003 to 10 parts by weight, preferably 0.02 to 2 parts by weight and more preferably 0.1 to 2 parts by weight per 100 parts by weight of the component (a). If the amount of the component (d) compounded is less than 0.003 part by weight, the melt dropping-preventing effect cannot be obtained. Further, an inorganic filler can be used as the component (e) of the present invention. The inorganic filler is not critical in form; that is, it may be fibrous, granular or powdery. Examples of fibrous inorganic fillers include glass fibers, carbon fibers, alumina fibers and the like. Particularly preferred are glass fibers and carbon fibers. The form of the glass fibers includes a cloth form, a mat form, bundle cut form, a short fiber form and a filament form. It is preferred for the glass fiber to be of the bundle cut form and to have a length of 0.05 to 13 mm and a fiber diameter of 5 to 20 $\mu$m. Particularly preferably the glass fiber is subjected to silane treatment.

As the carbon fiber, a polyacrylonitrile (PAN)-based fiber is preferred. More preferably the carbon fiber is of the chopped fiber type and is a bundle of fibers each having a length of about 3 mm and a diameter of 7 to 15 $\mu$m.

As the granular or powdery inorganic filler, talc, carbon black, graphite, titanium dioxide, silica, mica, calcium carbonate, calcium sulfate, barium sulfate, magnesium carbonate, magnesium sulfate, barium sulfate, oxy sulfate, tin oxide, alumina, kaolin, silicon carbide, metal powder and the like can be used. Talc, calcium carbonate and mica are preferred. The average particle diameter of talc is preferably 0.3 to 20 $\mu$m and more preferably 0.6 to 10 $\mu$m.

The preferred average particle diameter of calcium carbonate is 0.1 to 20 $\mu$m. The average particle diameter of mica is preferably 40 to 250 $\mu$m and more preferably 50 to 150 $\mu$m.

The amount of the inorganic filler compounded is 1 to 300 parts by weight, preferably 10 to 250 parts by weight per 100 parts by weight of the component (a). If the amount of the inorganic filler compounded is less than 1 part by weight, no sufficient effect as a filler can be obtained. On the other hand, if it is more than 300 parts by weight, uniform dispersion cannot be obtained and a composition having a poor mechanical strength is likely to be obtained.

The flame-retardant resin composition of the present invention contains the components (a) to (c) and, if necessary, further the components (d) and (e). In addition, various additives or other synthetic resins can be added, if necessary, unless they impair the objects of the present invention. Examples of such additives include phosphorous acid ester or phosphoric acid ester-based antioxidants, benzotriazole or benzophenone-based ultraviolet ray absorbers, aliphatic carboxylic acid ester or paraffin-based external lubricants, lubricating agents, releasing agents, antistatic agents, and coloring agents.

The resin composition of the present invention can be obtained by compounding the components (a) to (c) and in some cases, further the components (d) and (e), and if necessary, further various additives, and kneading at a suitable temperature, for example, at 270 to 320°C. In this case, compounding and kneading can be carried out by the usual method. More specifically, it can be carried out by the melt kneading method or the solution blending method, using a kneader, a mixing roll, an extruder, a Bambury's mixer, a Henschel mixer and a kneading roll.

The present invention provides a resin composition which is excellent in flame retardance and further in heat resistance and mechanical strength.

Accordingly, moldings obtained using the resin composition of the present invention are of high safety against fire and thus can be widely used as home electric applicances, construction materials and so forth.

The present invention is described in greater detail with reference to the following examples.

REFERENCE EXAMPLE 1

Production of Polystyrene having Syndiotactic Configuration

In a reactor were placed 2 ℓ of toluene as a solvent and 5 mmol of tetraethoxytitanium and 500 mmol as aluminum atom of methylaluminoxane as catalyst components, and at 50°C, 15 ℓ of styrene was introduced and polymerized for 4 hours.

After the reaction was completed, the product was washed with a hydrochloric acid/methanol mixture to decompose and remove the catalyst components, and then dried to obtain 2.5 kg of a styrene-based polymer (polystyrene). The polymer was extracted with methyl ethyl ketone in a Soxhlet to obtain an extraction residue of 95% by weight. The weight average molecular weight of the polymer was 800,000. In a $^{13}$C-NMR analysis (solvent: 1,2-dichlorobenzene), an absorption ascribable to the syndiotactic configuration was observed at 145.35 ppm. The syndiotacticity in racemic pentad as calculated from the peak area was 96%.

REFERENCE EXAMPLE 2

Production of Styrene Copolymer having Syndiotactic Configuration

In a reactor were placed 6 ℓ of toluene as a solvent and 5 mmol of tetraethoxytitanium and 500 mmol as aluminum atom of methylaluminoxane as catalyst components, and at 50°C, 48.75 mol of styrene and 1.25 mol of p-methylstyrene was introduced and polymerized for 2 hours.

After the completion of reaction, the product was washed with a hydrochloric acid/methanol mixture to decompose and remove the catalyst components, and then dried to obtain 640 g of a copolymer. This copolymer was extracted with methyl ethyl ketone in a Soxhlet to obtain an extraction residue of 80% by weight. For the copolymer remaining after the extraction, the weight average molecular weight was 440,000, the number average molecular weight was 240,000, and the melting point was 255°C. The p-methylstyrene unit content of the copolymer was 5 mol%. In a $^{13}$C-NMR analysis, absorptions were observed at 145.11 ppm, 145.22 ppm and 142.09 ppm. The syndiotacticity in pentad of styrene units as calculated from the peak area was 72%.

EXAMPLES 1 TO 8, AND COMPARATIVE EXAMPLES 1 AND 2

The polystyrene having syndiotactic configuration as produced in Reference Example 1 (with the proviso that in Example 3, the styrene copolymer having syndiotactic configuration obtained in Reference Example 2 was used), a thermoplastic resin and a flame retardant (A, B) and an auxiliary flame retardant (C) were compounded in the proportion shown in Table 1, and kneaded at 290°C for 5 minutes by the use of a labo plast mill. After kneading, the mixture was molded at 300°C by the use of a molding machine. The Vicat softening point and the flame retardance as determined according to UL 94 Standards (sample thickness: $1.59 \cdot 10^{-3}$m (1/16 inch)) are shown in Table 1.

EXAMPLES 9 TO 18, AND COMPARATIVE EXAMPLES 3 TO 5

The polystyrene having syndiotactic configuration produced in Reference Example 1, a rubber-like polymer and a flame retardant (A, B), an auxiliary flame retardant (C) and glass fiber were compounded in the proportion shown in Table 2, and molded in the same manner as in Examples 1 to 3. The Izod impact value, tensile modulus, Vicat softening point and flame retardance as determined according to UL 94 Standards are shown in Table 2.

## Table 1

| | Syndiotactic Polystyrene (parts by weight) | Amount of Thermoplastic Resin (parts by weight) | | Flame Retardant (parts by weight) | | Auxiliary Flame Retardant (parts by weight)[4] | Vicat Softening Point (°C) | Evaluation of UL94 |
|---|---|---|---|---|---|---|---|---|
| | | | | A[2] | B[3] | | | |
| Example 1 | 100 | | – | 18 | 6 | 4 | 200< | V-O |
| Example 2 | 100 | | – | 15 | 0 | 5 | 200< | V-O |
| Example 3 | 100[1] | | – | 20 | 0 | 6 | 200< | V-O |
| Example 4 | 20 | Polycarbonate[6] | 80 | 13 | 2 | 6 | 170 | V-O |
| Example 5 | 20 | Polyethylene[7] terephthalate | 80 | 15 | 0 | 5 | 200< | V-O |
| Example 6 | 20 | ABS resin[8] | 80 | 15 | 0 | 5 | 150 | V-O |
| Example 7 | 20 | Polysulfone[9] | 80 | 15 | 0 | 5 | 200< | V-O |
| Example 8 | 50 | Polycarbonate | 50 | 25 | 6 | 8 | 190 | V-O |
| Comparative Example 1 | 100 | | – | 0 | 0 | 0 | 200< | Burned |
| Comparative Example 2 | 20 | Polycarbonate | 80 | 35 | 15 | 8 | 170 | V-O |

*1   Styrene copolymer having syndiotactic configuration produced in Reference Example 2

*2   Decabromodiphenyl ether (trade name: SAYTEX® 102, produced by Ethyl Corp.)

*3   Tetrabromobisphenol A (trade name: SAYTEX® RB-100PC, produced by Ethyl Corp.)

*4   $Sb_2O_3$ (trade name ATOX-S, produced by Nikon Seiko Co.,Ltd.)

*5   Too brittle and unsuitable for practical use.

*6   Trade name: Taflon A-2500; Viscosity average molecular weight: 23,000, produced by Idemitsu Petrochemical Co., Ltd.

*7   Trade name: Dianite MA-523, produced by Mitsubishi Rayon Co., Ltd., $[\eta]$: 0.78 dℓ/g

*8   Trade name: JSR ABS 15, produced by Japan Synthetic Rubber Co., Ltd.

*9   Trade name: UDEL Polysulfone P-1700, produced by Union Carbide Corp.

8

Table 2

| | Polystyrene Having Syndiotactic Configuration (parts by weight) | Thermoplastic Resin | | Rubber | | Flame Retardant (parts by weight) | |
|---|---|---|---|---|---|---|---|
| | | Type | Amount (parts by weight) | Type | Amount (parts by weight) | A*5 | B *6 |
| Example 9 | 70 | – | – | SEBS*2 | 30 | 15 | 0 |
| Example 10 | 70 | – | – | SEBS | 30 | 16 | 3 |
| Example 11 | 85 | – | – | SEBS | 15 | 15 | 0 |
| Example 12 | 80 | – | – | MAS*3 | 20 | 15 | 0 |
| Example 13 | 85 | – | – | SBS*4 | 15 | 15 | 0 |
| Example 14 | 80 | – | – | Polybutadiene | 20 | 15 | 0 |
| Example 15 | 50 | Polycarbonate*1 | 40 | SEBS | 10 | 20 | 4 |
| Comparative Example 3 | 100 | – | – | – | – | 15 | 0 |
| Comparative Example 4 | 70 | – | – | SEBS | 30 | 0 | 0 |
| Comparative Example 5 | 70 | – | – | SEBS | 30 | 35 | 5 |
| Example 16 | 100 | – | – | – | – | 18 | 0 |
| Example 17 | 80 | – | – | SEBS | 20 | 20 | 0 |
| Example 18 | 80 | Polycarbonate | 20 | SEBS | 20 | 18 | 0 |

Table 2 (continued)

| | Auxiliary[*7] Flame Retardant (parts by weight) | Inorganic Filler | | Izod Impact Value (notched) [Kg·cm/cm] | Tensile Modulas [kg/cm$^2$] | Evaluation of UL94 | Vicat Softening Point (°C) |
|---|---|---|---|---|---|---|---|
| | | Type | Amount (parts by weight) | | | | |
| Example 9 | 5 | – | – | 12.1 | 30,000 | V-0 | 97 |
| Example 10 | 4 | – | – | 12.1 | 30,000 | V-0 | 97 |
| Example 11 | 5 | – | – | 7.4 | 30,000 | V-0 | 201 |
| Example 12 | 5 | – | – | 8.0 | 35,000 | V-0 | – |
| Example 13 | 5 | – | – | 4.2 | 32,000 | V-0 | 252 |
| Example 14 | 5 | – | – | 3.8 | 30,000 | V-0 | – |
| Example 15 | 7 | – | – | 5.9 | 31,500 | V-0 | 168 |
| Comparative Example 3 | 5 | – | – | 2.2 | 40,000 | V-0 | 200 < |
| Comparative Example 4 | 0 | – | – | 12.1 | 30,000 | Burned | 97 |
| Comparative Example 5 | 20 | – | – | 1.8 | 15,000 | V-0 | 96 |
| Example 16 | 6 | GF[*8] | 43 | 10 | 86,000 | V-0 | 263 |
| Example 17 | 6 | GF | 20 | 15 | 53,000 | V-0 | 231 |
| Example 18 | 6 | GF | 20 | 9 | 64,000 | V-0 | 249 |

*1　Trade name:　Taflon A-2500; viscosity average molecular weight: 23,000, produced by Idemitsu Petrochemical Co., Ltd.

*2　Styrene-hydrogenated butadiene block copolymer (trade name: Kraton G-1652, produced by Shell Chemical Co.,Ltd.)

*3　Methyl methacrylate-n-butyl acrylate-styrene copolymer (trade name: PARALOID ® KM330, produced by Rohm & Haas Co., Ltd.)

*4　Styrene-butadiene block copolymer (trade name: JSR TR-2000, produced by Japan Synthetic Rubber Co.,Ltd.: styrene content: 40% by weight)

*5　Decabromodiphenyl ether (trade name: SAYTEX ® 102, produced by Ethyl Corp.)

*6　Tetrabromobisphenol A (trade name: SAYTEX ® RB-100PC, produced by Ethyl Corp.)

*7　$Sb_2O_3$ (trade name: ATOX-S, produced by Nikon Seiko Co.,Ltd.)

*8　GF: Glass fiber (CS 03 MA 429A, produced by Asahi Fiber Co., Ltd.; fiber length: 3 mm, fiber diameter: 13 μm)

REFERENCE EXAMPLE 3

Production of Polystyrene having Syndiotactic Configuration

In a reactor were placed 2 ℓ of toluene as a solvent and 5 mmol of tetraethoxytitanium and 500 mmol as aluminum atom of methylaluminoxane as catalyst components, and at 55 °C, 15 ℓ of styrene was introduced and polymerized for 4 hours.

After the reaction was completed, the product was washed with a hydrochloric acid/methanol mixture to decompose and remove the catalyst components, and then dried to obtain 2.5 kg of a styrene-based polymer (polystyrene). The polymer was extracted with methyl ethyl ketone in a Soxhlet to obtain an extraction residue or 97% by weight. The weight average molecular weight of the polymer was 400,000, the number average molecular weight of the polymer was 180,000, and the melting point of the polymer was 269 °C.

In $^{13}$C-NMR analysis (solvent: 1,2-dichlorobenzene) of the polymer, an absorption at 145.35 ppm as assigned to the syndiotactic configuration was observed. The syndiotacticity in racemic pentad as calculated from the peak area was 98%.

EXAMPLE 19

To 100 parts by weight of the polystyrene having syndiotactic configuration obtained in Reference Example 3 were added 0.7 part by weight of (2,6-di-tert-butyl-4-methylphenyl)pentaerythritol diphosphite (trade name: PEP-36, produced by Adeka Agas Corp.) and 0.1 part by weight of 2,6-di-tert-butyl-4-methylphenol (trade name: Sumiriser BHT, produced by Sumitomo Kagaku Co., Ltd.) as antioxidants, 23 parts by weight of polytribromostyrene, 6 parts by weight of antimony trioxide ($Sb_2O_3$ (trade name Atox-S, produced by Nikon Seiko Co, Ltd.)), and 0.3 part by weight of polytetrafluoroethylene, which were then dry blended and kneaded and pelletized by the use of a twin-screw kneading extruder.

The pellets thus obtained were injection molded to produce a $0.79 \cdot 10^{-3}$m (1/32 inch) thick flammable specimen. This specimen was subjected to the burning test according to UL94 Standards. The results of the burning test are shown in Table 4 along with the results of measurement of impact strength, flexural strength and Vicat softening point.

EXAMPLES 20 TO 27, AND COMPARATIVE EXAMPLE 6

In the same manner as in Example 1 except that the components (a) to (e) shown in Table 3 were compounded in a predetermined ratio, test pieces were produced and evaluated: The results are shown in Table 4.

Table 3

| | Polystyrene Having Syndiotactic Configuration[*1] (parts by weight) | Thermoplastic Resin[*2] | | Rubber[*3] | | Flame Retardant [*4] | | Auxiliary Flame Retardant | |
|---|---|---|---|---|---|---|---|---|---|
| | | Type | Amount (parts by weight) | Type | Amount (parts by weight) | Type | Amount (parts by weight) | Type | Amount (parts by weight) |
| Example 19 | 100 | – | – | – | – | a | 23 | $Sb_2O_3$ | 6 |
| Example 20 | 100 | – | – | – | – | a | 23 | $Sb_2O_3$ | 6 |
| Example 21 | 100 | – | – | SB | 25 | a | 29 | $Sb_2O_3$ | 8 |
| Example 22 | 100 | – | – | MAS | 25 | a | 30 | $Sb_2O_3$ | 7 |
| Example 23 | 100 | PC | 30 | – | – | b | 24 | $Sb_2O_3$ | 8 |
| Example 24 | 100 | – | – | – | – | a | 23 | $Sb_2O_3$ | 6 |
| Example 25 | 100 | PC | 100 | – | – | c | 46 | $Sb_2O_3$ | 12 |
| Example 26 | 100 | GPPS | 100 | SB | 65 | c | 80 | $Sb_2O_3$ | 16 |
| Comparative Example 6 | 100 | – | – | – | – | a | 25 | $Sb_2O_3$ | 7 |
| Example 27 | 100 | PPS | 60 | – | – | a | 23 | $Sb_2O_3$ | 6 |

13

Table 3 (continued)

| | Tetrafluoroethylene-Based Polymer[6] (parts by weight) | Inorganic Filler[7] | |
| --- | --- | --- | --- |
| | | Type | Amount (parts by weight) |
| Example 19 | 0.3 | – | – |
| Example 20 | 0.2 | GF | 43 |
| Example 21 | 1.0 | – | – |
| Example 22 | 0.4 | Talc | 20 |
| Example 23 | 0.4 | – | – |
| Example 24 | 0.3 | { GF / Talc | { 80 / 20 |
| Example 25 | 1.0 | GF | 125 |
| Example 26 | 1.0 | Talc | 65 |
| Comparative Example 6 | 20 | – | – |
| Example 27 | 0.3 | GF | 70 |

*1  Styrene polymer having syndiotactic configuration :

Styrene polymer having syndiotactic configuration

produced in Reference Example 3

*2  Thermoplastic Resin

5 PC:  Polycarbonate (produced by Idemitsu Petrochemical

Co., Ltd.; trade name:  Idemitsu Polycarbonate A 3000)

GPPS:  General Purpose Polystyrene (produced by

Idemitsu Petrochemical Co., Ltd.; trade name:

Idemitsu Polystyrene US-305)

no PPS: Polyphenylenesulfide (intrinsic viscosity

$[\eta]$: 0.18 d$\ell$/g

*3  Rubber

SB:  Styrene grafted butadiene rubber (particle

diameter: 0.7 μm; trade name; Methaburene IP-2;

n5 produced by Mitsubishi Rayon Co.,Ltd.)

MAS:  Methyl methacrylate-n-butyl acrylate-styrene

copolymer (produced by Rohm & Haas Corp.;  trade name:

PARALOID ® KM-330)

*4  Flame Retardant

a:  Polytribromostyrene (produced by Nissan Fero Corp.;

trade name:  PYRO-CHEK® 68 PB)

b:  Decabromodiphenyl ether (produced by Ethyl Corp.;

trade name:  SAYTEX ® 102)

c:  Poly(dibromophenylene oxide) (produced by Great

Lake Corp.; trade name:  GLC PO-64P)

15

*5  $Sb_2O_3$ (trade name ATOX-S, produced by Nikon Seiko Co.,Ltd.)

*6  Tetrafluoroethylene-based polymer

Polytetrafluoroethylene (produced by Du Pont Corp.;

trade name:  Teflon)

*7  Inorganic filler

GF:  Glass fiber (CSO3 MA429A, produced by Asahi Fiber

Co., Ltd.; fiber length:  3 mm;  fiber diameter:

13 µm)

Talc:  Talc FFR produced by Asada Seifun Co., Ltd.;

average particle diameter: 0.6 µm

## Table 4

| | Izod Impact Strength[1] (kg·cm/cm) | Flexural Strength[2] (kgf/cm²) | Modulas of Elasticity (kgf/cm²) | Thickness [inch]($10^{-3}$m) | | Burning Test[3] 1st Flaming Time (seconds) | 2nd Flaming Time (seconds) | Melt Dropping | Vicat Softening Point (°C) |
|---|---|---|---|---|---|---|---|---|---|
| Example 19 | 2.5 | 850 | 41,000 | [1/32] | 0.79 | 3 | 1 | None | 258 |
| Example 20 | 11 | 1400 | 130,000 | [1/32] | 0.79 | 2 | 1 | None | 261 |
| Example 21 | 16 | 500 | 33,000 | [1/32] | 0.79 | 1 | 2 | None | 198 |
| Example 22 | 12 | 500 | 52,000 | [1/32] | 0.79 | 2 | 1 | None | 214 |
| Example 23 | 5 | 980 | 47,000 | [1/32] | 0.79 | 1 | 1 | None | 193 |
| Example 24 | 10 | 1150 | 154,000 | [1/32] | 0.79 | 1 | 1 | None | 264 |
| Example 25 | 12 | 1190 | 142,000 | [1/32] | 0.79 | 2 | 1 | None | 263 |
| Example 26 | 14 | 480 | 51,500 | [1/32] | 0.79 | 3 | 1 | None | 167 |
| Comparative Example 6 | 1.9 | 490 | 32,100 | [1/32] | 0.79 | 2 | 1 | None | 250 |
| Example 27 | 8.2 | 1800 | 123,000 | [1/32] | 0.79 | 1 | 1 | None | 268 |

```
*1    Izod impact strength

      Measured according to JIS-Z-7110 (notched).

*2    Flexural strength and Modulus of elasticity

      Measured according to ASTM-D-790-71.

*3    Burning test

      Measured according to UL94 Standards (both the first

      and second flaming times indicate a flaming time after

      the fire is removed).
```

**Claims**

1. A flame-retardant resin composition comprising:
   (a) 100 parts by weight of a styrene-based polymer having mainly syndiotactic configuration such that the proportion of racemic pentad is at least 30 %, or a mixture comprising 1 - 99 % by weight of said styrene-based polymer and 99 % to 1 % by weight of a thermoplastic resin (exclusive of tetrafluoroethylene-based polymer) and/or rubber;
   (b) 3 to 40 parts by weight of a halogen-containing -flame retardant selected from the group consisting of polychlorostyrene, brominated polystyrene, polydibromophenyleneoxide, decadibromodiphenyl ether, and tetrabromobisphenol A, and
   (c) 1 to 15 parts by weight of an auxiliary flame retardant selected from the group consisting of antimony-containing auxiliary flame retardants, zinc borate, barium-metaborate and zirconiumoxide.

2. The composition as claimed in Claim 1, wherein the thermoplastic resin is at least one compound selected from the group consisting of styrene-based polymer other than component (a), polyester, polycarbonate, polyether, ABS resin and polyphenylenesulfide.

3. The composition as claimed in Claim 1, wherein the rubber is styrene grafted butadiene rubber, methyl methacrylate-n-butyl acrylate-styrene copolymer, styrene-hydrogenated butadiene block copolymer or styrene-butadiene block copolymer.

4. The composition as claimed in Claim 1, wherein the auxiliary flame retardant is antimony trioxide.

5. The flame-retardant resin composition of Claim 1 comprising additionally:
   (d) 0.003 to 10 parts by weight of tetrafluoroethylene based polymer.

6. The composition as claimed in Claim 5, wherein the styrene-based polymer having syndiotactic configuration such that the proportion of racemic pentad is at least 30 % has 50,000 to 1,000,000 of weight average molecular weight.

7. The composition as claimed in Claim 5, wherein the thermoplastic resin is at least one compound selected from the group consisting of styrene-based polymers other than component (a), polyester, polycarbonate, polyether, ABS resin and polyphenylenesulfide.

8. The composition as claimed in Claim 5, wherein the rubber is rubber-like copolymer containing a styrene-based compound as one component.

18

9. The composition as claimed in Claim 8, wherein the rubber-like copolymer is styrene grafted butadiene rubber, methyl methacrylate-n-butyl acrylate-styrene copolymer, styrene-hydrogenated butadiene block copolymer or styrene-butadiene block copolymer.

10. The composition as claimed in Claim 5, wherein the thermoplastic resin and/or rubber is added in an amount of 99% by weight of the mixture.

11. The composition as claimed in Claim 5, wherein the auxiliary flame retardant is antimony trioxide.

12. The composition as claimed in Claim 5, wherein the tetrafluoroethylene-based polymer is tetrafluoroethylene homopolymer.

13. The flame-retardant resin composition of Claim 1 comprising additionally:
    (c) 1 to 300 parts by weight of an inorganic filler.

14. The composition as claimed in Claim 13, wherein the thermoplastic resin is at least one compound selected from the group consisting of styrene-based polymers other than component (a), polyester, polycarbonate, polyether, ABS resin and polyphenylenesulfide.

15. The composition as claimed in Claim 13, wherein the rubber is styrene grafted butadiene rubber, methyl methacrylate-n-butyl acrylate-styrene copolymer, styrene-hydrogenated butadiene block copolymer or styrene-butadiene block copolymer.

16. The composition as claimed in Claim 13, wherein the flame retardant is decabromodiphenyl ether, polytribromo styrene, poly(dibromophenylene oxide) or tetrabromobisphenol A.

17. The composition as claimed in Claim 13, wherein the auxiliary flame retardant is antimony trioxide.

18. The composition as claimed in Claim 13, wherein the inorganic filler is glass fiber or talc.

19. The flame-retardant resin composition of Claim 5 comprising additionally:
    (e) 1 to 300 parts by weight of an inorganic filler.

20. The composition as claimed in Claim 19, wherein the styrene-based polymer having mainly syndiotactic configuration has 50,000 to 1,000,000 of weight average molecular weight.

21. The composition as claimed in Claim 19, wherein the thermoplastic resin is at least one compound selected from the group consisting of styrene-based polymers other than component (a), polyester, polycarbonate, polyether, ABS resin and polyphenylenesulfide.

22. The composition as claimed in Claim 19, wherein the rubber is styrene grafted butadiene rubber, methyl methacrylate-n-butyl acrylate-styrene copolymer, styrene-hydrogenated butadiene block copolymer or styrene-butadiene block copolymer. .

23. The composition as claimed in Claim 19, wherein the flame retardant is decabromodiphenyl ether, polytribromo styrene, poly(dibromophenylene oxide) or tetrabromobisphenol A.

24. The composition as claimed in Claim 19, wherein the auxiliary flame retardant is antimony trioxide.

25. The composition as claimed in Claim 19, wherein the inorganic filler is glass fiber or talc.

**Patentansprüche**

1. Flammhemmende Harzzusammensetzung, umfassend:
    (a) 100 Gewichtsteile eines Polymers auf Styrolbasis, das vorwiegend syndiotaktische Konfiguration aufweist, so daß der Anteil an racemischen Pentaden mindestens 30 % beträgt, oder ein Gemisch, umfassend 1 bis 99 Gew.-% des Polymers auf Styrolbasis und 99 bis 1 Gew.-% eines thermoplastischen Harzes (ausschließlich eines Polymers auf Tetrafluorethylenbasis) und/oder Gummi;

(b) 3 bis 40 Gewichtsteile eines halogenhaltigen Flammschutzmittels, ausgewählt aus der Gruppe bestehend aus Polychlorstyrol, bromiertem Polystyrol, Poly(dibromphenylenoxid), Dekadibromdiphenylether und Tetrabrombisphenol A, und
(c) 1 bis 15 Gewichtsteile eines Hilfsflammschutzmittels, ausgewählt aus der Gruppe bestehend aus antimonhaltigen Hilfsflammschutzmitteln, Zinkborat, Bariummetaborat und Zirkonoxid.

2.  Zusammensetzung nach Anspruch 1, worin das thermoplastische Harz mindestens eine Verbindung ist, ausgewählt aus der Gruppe bestehend aus einem anderen Polymer auf Styrolbasis als die Komponente (a), Polyester, Polycarbonat, Polyether, ABS-Harz und Polyphenylensulfid.

3.  Zusammensetzung nach Anspruch 1, worin der Gummi Styrol-gepfropfter Butadien-Gummi, Methylmethacrylat-n-Butylacrylat-Styrol-Copolymer, ein Blockcopolymer aus Styrol und hydriertem Butadien oder Styrol-Butadien-Blockcopolymer ist.

4.  Zusammensetzung nach Anspruch 1, worin das Hilfsflammschutzmittel Antimontrioxid ist.

5.  Flammhemmende Harzzusammensetzung nach Anspruch 1, zusätzlich umfassend:
    (d) 0,003 bis 10 Gewichtsteile eines Polymers auf Tetrafluorethylenbasis.

6.  Zusammensetzung nach Anspruch 5, worin das Polymer auf Styrolbasis, das syndiotaktische Konfiguration aufweist, so daß der Anteil an racemischen Pentaden mindestens 30 % beträgt, ein Gewichtsmittel des Molekulargewichts von 50 000 bis 1 000 000 aufweist.

7.  Zusammensetzung nach Anspruch 5, worin das thermoplastische Harz mindestens eine Verbindung ist, ausgewählt aus der Gruppe bestehend aus anderen Polymeren auf Styrolbasis als die Komponente (a), Polyester, Polycarbonat, Polyether, ABS-Harz und Polyphenylensulfid.

8.  Zusammensetzung nach Anspruch 5, worin der Gummi ein gummiähnliches Copolymer ist, das eine Verbindung auf Styrolbasis als eine Komponente enthält

9.  Zusammensetzung nach Anspruch 8, worin das gummiähnliche Copolymer Styrol-gepfropfter Butadien-Gummi, Methylmethacrylat-n-Butylacrylat-Styrol-Copolymer, Blockcopolymer aus Styrol und hydriertem Butadien oder Styrol-Butadien-Blockcopolymer ist.

10. Zusammensetzung nach Anspruch 5, worin das thermoplastische Harz und/oder der Gummi in einer Menge von 99 Gew. -% des Gemisches zugesetzt ist.

11. Zusammensetzung nach Anspruch 5, worin das Hilfsflammschutzmittel Antimontrioxid ist.

12. Zusammensetzung nach Anspruch 5, worin das Polymer auf Tetrafluorethylenbasis Tetrafluorethylen-Homopolymer ist.

13. Flammhemmende Harzzusammensetzung nach Anspruch 1, zusätzlich umfassend:
    (c) 1 bis 300 Gewichtsteile eines anorganischen Füllstoffs.

14. Zusammensetzung nach Anspruch 13, worin das thermoplastische Harz mindestens eine Verbindung ist, ausgewählt aus der Gruppe bestehend aus einem anderen Polymer auf Styrolbasis als die Komponente (a) , Polyester, Polycarbonat, Polyether, ABS-Harz und Polyphenylensulfid ist.

15. Zusammensetzung nach Anspruch 13, worin der Gummi Styrol-gepfropfter Butadien-Gummi, Methylmethacrylat-n-Butylacrylat-Styrol-Copolymer, Blockcopolymer aus Styrol und hydriertem Butadien oder Styrol-Butadien-Blockcopolymer ist.

16. Zusammensetzung nach Anspruch 13, worin das Flammschutzmittel Dekabromdiphenylether, Polytribromstyrol, Poly(dibromphenylenoxid) oder Tetrabrombisphenol A ist.

17. Zusammensetzung nach Anspruch 13, worin das Hilfsflammschutzmittel Antimontrioxid ist.

20

EP 0 324 392 B1

**18.** Zusammensetzung nach Anspruch 13, worin der anorganische Füllstoff Glasfaser oder Talk ist.

**19.** Flammhemmende Harzzusammensetzung nach Anspruch 5, zusätzlich umfassend:
(e) 1 bis 300 Gewichtsteile eines anorganischen Füllstoffes.

**20.** Zusammensetzung nach Anspruch 19, worin das Polymer auf Styrolbasis, das vorwiegend syndiotaktische Konfiguration aufweist, ein Gewichtsmittel des Molekulargewichts von 50 000 bis 1 000 000 aufweist.

**21.** Zusammensetzung nach Anspruch 19, worin das thermoplastische Harz mindestens eine Verbindung ist, ausgewählt aus der Gruppe bestehend aus einem anderen Polymer auf Styrolbasis als die Komponente (a) , Polyester, Polycarbonat, Polyether, ABS-Harz und Polyphenylensulfid.

**22.** Zusammensetzung nach Anspruch 19, worin der Gummi Styrol-gepfropfter Butadien-Gummi, Methylmethacrylat-n-Butylacrylat-Styrol-Copolymer, Blockcopolymer aus Styrol und hydriertem Butadien oder Styrol-Butadien-Blockcopolymer ist.

**23.** Zusammensetzung nach Anspruch 19, worin das Flammschutzmittel Dekabromdiphenylether, Polytribromstyrol, Poly(dibromphenylenoxid) oder Tetrabrombisphenol A ist.

**24.** Zusammensetzung nach Anspruch 19, worin das Hilfsflammschutzmittel Antimontrioxid ist.

**25.** Zusammensetzung nach Anspruch 19, worin der anorganische Füllstoff Glasfaser oder Talk ist.

**Revendications**

**1.** Composition de résine à combustion retardée comprenant :
(a) 100 parties en poids d'un polymère à base de styrène ayant une configuration principalement syndiotactique, de telle sorte que la proportion de composé racémique à cinq motifs soit d'au moins 30%, ou d'un mélange comprenant 1-99% en poids dudit polymère à base de styrène et 99% à 1% en poids d'une résine thermoplastique (à l'exclusion d'un polymère à base de tétrafluoroéthylène) et/ou d'un caoutchouc ;
(b) 3 à 40 parties en poids d'un retardateur de combustion halogéné choisi dans le groupe constitué par le polychlorostyrène, le polystyrène bromé, le poly(oxyde de dibromophénylène), l'éther décabromodiphénylique et le tétrabromobisphénol A; et
(c) 1 à 15 parties en poids d'un retardeur de combustion auxiliaire choisi dans le groupe constitué par les retardateur de combustion auxiliaires contenant de l'antimoine, le borate de zinc, le métaborate de baryum et l'oxyde de zirconium.

**2.** Composition selon la revendication 1, dans laquelle la résine thermoplastique est au moins un composé choisi dans le groupe constitué par un polymère à base de styrène autre que le constituant (a), un polyester, un polycarbonate, un polyéther, une résine ABS et un poly(sulfure de phénylène).

**3.** Composition selon la revendication 1, dans laquelle le caoutchouc est un caoutchouc butadiène greffé au styrène, un copolymère méthacrylate de méthyle-acrylate de n-butyle-styrène, un copolymère séquencé styrène-butadiène hydrogéné ou un copolymère séquencé styrène-butadiène.

**4.** Composition selon la revendication 1, dans laquelle le teur de combustion auxiliaire est le trioxyde d'antimoine.

**5.** Composition de résine à combustion retardée selon la revendication 1, comprenant, en plus :
(d) 0,003 à 10 parties en poids de polymère à base de tétrafluoroéthylène.

**6.** Composition selon la revendication 5, dans laquelle le polymère à base de styrène ayant une configuration syndiotactique telle que la proportion de composé racémique à cinq motifs soit d'au moins 30% possède une masse moléculaire moyenne en poids de 50 000 à 1 000 000.

21

7. Composition selon la revendication 5, dans laquelle la résine thermoplastique est au moins un composé choisi dans le groupe constitué par les polymères à base de styrène autres que le constituant (a), un polyester, un polycarbonate, un polyéther, une résine ABS et un poly(sulfure de phénylène).

8. Composition selon la revendication 5, dans laquelle le caoutchouc est un copolymère de type caoutchouc contenant un composé à base de styrène comme l'un de ses constituants.

9. Composition selon la revendication 8, dans laquelle le copolymère de type caoutchouc est un caoutchouc butadiène greffé au styrène, un copolymère méthacrylate de méthyleacrylate de n-butyle-styrène, un copolymère séquencé styrène-butadiène hydrogéné ou un copolymère séquencé styrène-butadiène.

10. Composition selon la revendication 5, dans laquelle la résine thermoplastique et/ou le caoutchouc est ajouté en une quantité de 99% du poids du mélange.

11. Composition selon la revendication 5, dans laquelle l'ignifugeant auxiliaire est le trioxyde d'antimoine.

12. Composition selon la revendication 5, dans laquelle le polymère à base de tétrafluoroéthylène est un homopolymère de tétrafluoroéthylène.

13. Composition de résine à combustion retardée selon la revendication 1, comprenant, en plus :
      (c) 1 à 300 parties en poids d'une charge minérale.

14. Composition selon la revendication 13, dans laquelle la résine thermoplastique est au moins un composé choisi dans le groupe constitué par les polymères à base de styrène autres que le constituant (a), un polyester, un polycarbonate, un polyéther, une résine ABS et un poly(sulfure de phénylène).

15. Composition selon la revendication 13, dans laquelle le caoutchouc est un caoutchouc butadiène greffé au styrène, un copolymère méthacrylate de méthyle-acrylate de n-butyle-styrène, un copolymère séquencé styrène-butadiène hydrogéné ou un copolymère séquencé styrène-butadiène.

16. Composition selon la revendication 13, dans laquelle le retardeur de combustion est l'éther décabromodiphénylique, le polytribromostyrène, le poly(oxyde de dibromophénylène) ou le tétrabromobisphénol A.

17. Composition selon la revendication 13, dans laquelle le retardateur de combustion auxiliaire est le trioxyde d' antimoine.

18. Composition selon la revendication 13, dans laquelle la charge minérale est de la fibre de verre ou du talc.

19. Composition selon la revendication 5, comprenant, en plus :
      (e) 1 à 300 parties en poids d'une charge minérale.

20. Composition selon la revendication 19, dans laquelle le polymère à base de styrène ayant une configuration principalement syndiotactique possède une masse moléculaire moyenne en poids de 50 000 à 1 000 000.

21. Composition selon la revendication 19, dans laquelle la résine thermoplastique est au moins un composé choisi dans le groupe constitué par les polymères à base de styrène autres que le constituant (a), un polyester, un polycarbonate, un polyéther, une résine ABS et un poly(sulfure de phénylène).

22. Composition selon la revendication 19, dans laquelle le caoutchouc est un caoutchouc butadiène greffé au styrène, un copolymère méthacrylate de méthyle-acrylate de n-butyle-styrène, un copolymère séquencé styrène-butadiène hydrogéné ou un copolymère séquencé styrène-butadiène.

23. Composition selon la revendication 19, dans laquelle l'ignifugeant est l'éther décabromodiphénylique, le polytribromostyrène, le poly(oxyde de dibromophénylène) ou le tétrabromobisphénol A.

24. Composition selon la revendication 19, dans laquelle l'ignifugeant auxiliaire est le trioxyde d'antimoine.

25. Composition selon la revendication 19, dans laquelle la charge minérale est de la fibre de verre ou du talc.